# EUROPEAN PATENT SPECIFICATION

(11) **EP 2 971 312 B1**
(45) Date of publication and mention of the grant of the patent: **19.07.2017**
(21) Application number: 14721147.8
(22) Date of filing: 17.03.2014
(51) Int. Cl.: D04H 1/04, D04H 1/425, D04H 1/46, D04H 1/48, D04H 1/544

(54) **MOLDABLE NONWOVEN HAVING HIGH STRENGTH TO WEIGHT RATIO FOR STRUCTURAL COMPONENTS AND METHOD OF CONSTRUCTION THEREOF**
FORMBARER VLIESSTOFF MIT EINEM HOHEN FESTIGKEITSGEWICHTSVERHÄLTNIS FÜR KOMPONENTEN SOWIE VERFAHREN ZUR HERSTELLUNG DAVON
NON TISSÉ POUVANT ÊTRE MOULÉ AYANT UN RAPPORT RÉSISTANCE SUR POIDS ÉLEVÉ POUR ÉLÉMENTS STRUCTURELS ET SON PROCÉDÉ DE CONSTRUCTION

(30) Priority: 15.03.2013 US 201361794630 P
(43) Date of publication of application: 20.01.2016
(73) Proprietor: Federal-Mogul Powertrain, Inc., Southfield, MI 48033 (US)
(72) Inventor: MEHBUBANI, Ritesh, Telford, PA 18969 (US); KHOSROSHAHI, Ali, Exton, PA 19341 (US); TAYLOR, Brian, Morgantown, PA 19543 (US); YANCHECK, Stephen, P., Phoenixville, PA 19460 (US); STAUDT, Eric, K., Reading, PA 19606 (US)
(74) Representative: HGF Limited
(86) International application number: PCT/US2014/030225
(87) International publication number: WO 2014/145457

(56) References cited:
- DE-A1- 19 506 083
- DE-U1- 20 300 098
- US-A1- 2003 064 651

## Description

### BACKGROUND OF THE INVENTION

### 1. Technical Field

This invention relates generally to nonwoven materials and to their methods of construction, and more particularly to structural nonwovens constructed at least partially from natural fibers and having a high strength to weight ratio.

### 2. Related Art

Today's structural and semi structural components, especially for the automotive industry, are made using either petroleum based materials, like plastic, either by injection molding, thermoforming or blow molding. Also, products are made from wood or metal, however, these end products have a high weight-to-strength ratio. Industry, and the automotive, aircraft and aerospace industries in particular, are looking to reduce weight and increase strength, and thus, are looking for high strength-to-weight ratio structural materials. This is being driven largely by the need to produce lighter vehicles, which in turn result in increased fuel and performance efficiencies. Further yet, industry is looking for structural materials that are environmentally friendly, such that their end of life does not result in a negative impact on the environment. DE20300098 describes a nonwoven material with a density of between 500 and 1500 gsm and including a mixture of natural fibres and polypropylene homo and maleic anhydride-modified polypropylene fibres to which plastic films, nonwovens or other decorative layers are bonded.

### SUMMARY OF THE INVENTION

In accordance with one aspect of the invention, a nonwoven material having a density between about 300-1200gsm is provided. The nonwoven material includes at least one nonwoven web formed from natural fibers and modified polypropylene fibers with Maleic Anhydride grafted Polypropylene. Further, a scrim layer is at least partially melted and diffused into the nonwoven web.

In accordance with another aspect of the invention, the scrim layer is on an outer surface of the nonwoven web and forms an outer surface of the nonwoven material.

In accordance with another aspect of the invention, the nonwoven material has a flexural strength AMD of about 76N.

In accordance with another aspect of the invention, the scrim layer is sandwiched between a pair of the nonwoven webs and is at least partially diffused into each of the nonwoven webs.

In accordance with another aspect of the invention, the nonwoven material has a flexural strength AMD of about 80N.

In accordance with another aspect of the invention, the nonwoven material is molded to form a vehicle door bolster, or other structural parts.

In accordance with another aspect of the invention, a method of constructing a nonwoven material having a density between about 300-1200gsm is provided. The method includes blending a mixture of natural cellulosic fibers, modified Polypropylene fibers with Maleic Anhydride grafted Polypropylene. Then, forming at least one nonwoven web from the blended mixture. Further, bonding the at least one nonwoven web to form a mat. Then, laminating a scrim layer to a surface of the mat and at least partially melting and diffusing the scrim material into a surface of the mat.

In accordance with another aspect of the invention, the method can further include forming and bonding a pair of the mats and laminating the scrim layer in sandwich relation between the pair of mats, with alloy regions formed containing material of the mats and the scrim layer.

In accordance with another aspect of the invention, the method can further include molding the nonwoven material to form a vehicle door bolster, or other structural parts.

### BRIEF DESCRIPTION OF THE DRAWINGS

These and other aspects, features and advantages of the present invention will become more readily appreciated when considered in connection with the following detailed description of presently preferred embodiments and best mode, appended claims and accompanying drawings, in which:
Figure 1 is a perspective view of a vehicle door bolster molded in accordance with one aspect of the invention;
Figure 2 is an enlarged fragmentary cross-sectional view of a nonwoven layer constructed in accordance with one aspect of the invention used to mold the vehicle door bolster of Figure 1; and
Figure 3 is a similar to Figure 2 showing a nonwoven layer constructed in accordance with another aspect of the invention.

### DETAILED DESCRIPTION OF PRESENTLY PREFERRED EMBODIMENTS

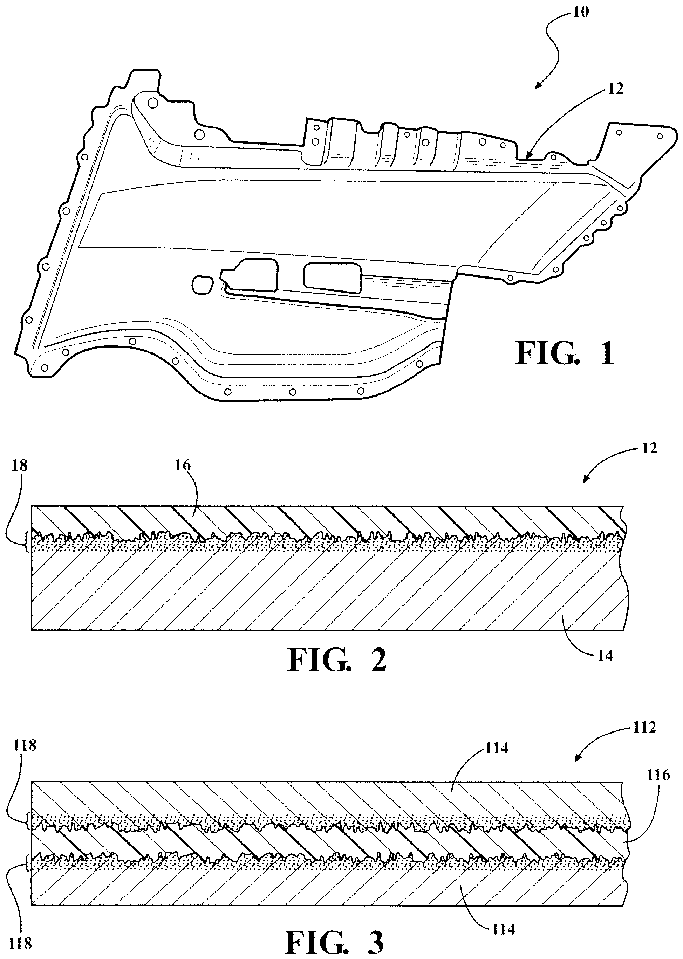

Referring in more detail to the drawings, Figure 1 illustrates a vehicle door bolster 10 constructed from a nonwoven material 12 (Figure 2) constructed in accordance with one aspect of the invention. The door bolster 10 is an interior vehicle door panel to which an outer decorated door panel, including a door handle, is attached. Accordingly, the door bolster 10 must be able to withstand the forces encountered from repeated opening and closing of the door, in addition to the other routing forces encountered by a vehicle door panel. Given the extreme demands placed on such door bolsters, manufacturers typically have specific specifications the door bolsters must meet. For example, one such requirement is that the door bolster material must have 1600 gsm. This requirement comes from the belief that this density is required for the door bolster to meet the following requirements in order to stand up to typical vehicle door applications; a flexural strength (machine direction) of 55.5N, a flexural strength (across machine direction) of 70.5N, a flexural toughness (machine direction) of 98.6%, a flexural toughness (across machine direction) of 97.5%, a flexural stiffness (machine direction) of 6.02N/m, and a flexural stiffness (across machine direction) of 8.84N/m. The nonwoven material 12 constructed in accordance with the invention is able to be compression molded to the configuration of the door bolster 10 and meet or exceed these requirements, though only having about 1200 gsm, which ultimately reduces weight, though achieving and exceeding the aforementioned structural requirements.

The nonwoven material, also referred to as nonwoven sheet or layer 12, is first constructed as a lightweight nonwoven web. The web is constructed of natural cellulosic fibers, such as, natural bast fibers including bamboo, kenaf, flax, hemp, jute, and the like. Accordingly, the fibers used are naturally renewable, and have a low carbon footprint compared to petroleum based fibers, which are not used. The bast fibers are blended with modified polypropylene fibers (Polypropylene with Maleic Anhydride grafted Polypropylene, referred to hereafter as PP with MAPP) which modified Polypropylene used here has a higher molecular weight compared with standard polypropylene fibers. The blended proportion of PP with MAPP can be between about 25%-60% based on the final structural properties required, and in one example, 50% PP with MAPP was used with 50% kenaf fibers. The addition of the MAPP to polypropylene fibers helps to increase the bond between the bast fibers and polypropylene. Maleic anhydride provides polarity and reactivity which gives the high adhesion needed, since cellulosic fibers are polar and hydrophilic whereas PP is nonpolar and hydrophobic. The MAPP makes some hydrogen or covalent bonds with the -OH group of the cellulose, and it also acts as a compatibilizer and provides a polar interaction between the cellulose and PP, which increases the strength of the composite, while the increased molecular weight of the modified PP increases the flexural strength of the composite.

The PP with MAPP fibers and bast fibers are first blended together and then the blend is process through a fine opener, which helps to make the blend more homogenous and also helps to open the fiber strands into individual fibers.

The blend is then processed through a web forming machine to form a nonwoven web, wherein the weight of the web can be between about 300gsm-5000gsm, wherein the sample made was about 1200gsm. The web is then bonded via one of two processes to form a mat 14, first, it can be bonded thermally by running the web through an air oven where the temperature of the oven is set to melt the PP/MAPP to bond the melted PP/MAPP with the natural cellulosic fibers. Then the bonded web or mat 14 is laminated with a thermoplastic layer, which can be nonwoven, e.g. spunbond, polypropylene scrim or an extruded polypropylene sheet or film 16. The second process includes bonding the nonwoven mechanically by needling the web to entangle the fibers with one another to form the mat 14. At this point, a nonwoven polypropylene scrim can be needled to the mat 14. Otherwise, the extruded polypropylene sheet or film can be laminated to the needled nonwoven mat 14.

The finished nonwoven material 12 can then be molded to take on the finished shape of the door bolster 10. Upon being molded, the finished thickness of the door bolster is between about 1-3mm, and the sample made was 2mm. The finished density was 1200gsm, which when compared to a product of the same size having a 1600gsm, saves about 1Kg per vehicle. Aside from having a significantly reduced gsm, the sample door bolster 10 using the nonwoven material of Figure 2 had a flexural strength AMD of about 76N, which is well in excess of the specification required of 70.5N. The enhanced strength and reduced weight is made possible by the scrim 16 which when bonded to the mat 14, melts and diffuses at least in part into the interstices of the mat 14 to form an alloy region 18 of the mat material and the scrim material, thereby filling voids within the mat 14 that would otherwise create stress risers, and thus, location of weakness. In addition, the outwardly facing surface of the scrim 16 forms a smooth, tough surface.

In Figure 3 a nonwoven material 112 is shown in accordance with another aspect of the invention, wherein the same reference numerals, offset by a factor of 100, are used to identify like features. The nonwoven material 112 is constructed having a scrim layer 116 formed of the same material discussed above for the scrim layer 16, however, rather than being on an outer surface of the nonwoven material 112, the scrim layer 116 is sandwiched between a pair of nonwoven mats 114. Each of the mats 114 is constructed as discussed above for the mats 14, however, their thicknesses are reduced and their individual densities are 600gsm, thereby forming the nonwoven layer 112 having a total of about 1200gsm. Although the nonwoven layers 12, 112 both have about a 1200gsm, the nonwoven layer 112 was tested and found to have a flexural strength AMD of 80N. Accordingly, it is stronger yet, and is equally moldable to form the door bolster 10. The added strength likely comes from the fact that instead of a single alloy region being formed, a pair of alloy regions 118 are formed on opposite sides of the melted scrim layer 116. Accordingly, with both nonwoven layers 12, 112 exceeding the specifications required for door bolsters, while having a significantly reduced gsm, weight savings are realized that contribute the ability to meet the increasingly demanding vehicle fuel efficiency requirements.

## Claims

1. A nonwoven material (12, 112), comprising:
at least one nonwoven web (14, 114) formed from natural cellulosic fibers and modified polypropylene fibers containing polypropylene blended with Maleic Anhydride grafted Polypropylene;
a scrim layer (16, 116) bonded to an outer surface of said at least one nonwoven web (14, 114) and being at least partially diffused into the interstices of said at least one nonwoven web (14, 114) to form an alloy region (18, 118) containing material of both said at least one nonwoven web (14, 114) and said scrim layer (16, 116), thereby filling voids within the at least one nonwoven web (14, 114) that would otherwise create stress risers; and
wherein said at least one nonwoven material (12, 112) has a total density between about 300-1200gsm.

2. The nonwoven material (12, 112) of claim 1 wherein said alloy region (18, 118) is formed such that the nonwoven material (12, 112) has a flexural strength across machine direction in excess of 70.5N.

3. The nonwoven material (12, 112) of claim 1 wherein said scrim layer (16, 116) forms an outer surface of said at least one nonwoven material.

4. The nonwoven material (12, 112) of claim 3 wherein said nonwoven material (12, 112) has a flexural strength across machine direction of about 76N.

5. The nonwoven material (112) of claim 1 wherein said scrim layer (116) is sandwiched between a pair of said at least one nonwoven webs (114) and is at least partially diffused into each of said nonwoven webs (114) to form a pair of alloy regions (118) on opposite sides of said scrim layer (116), said alloy regions (118) containing material from separate ones of said nonwoven webs (114) and said scrim layer (116).

6. The nonwoven material (112) of claim 5 wherein said nonwoven material (12, 112) has a flexural strength across machine direction of about 80N.

7. The nonwoven material (112) of claim 5 wherein each nonwoven web (114) of said pair of nonwoven webs (114) has a density of about 600gsm.

8. The nonwoven material (12, 112) of claim 1 wherein said nonwoven material (12, 112) is molded to form a vehicle door bolster.

9. A method of constructing a nonwoven material (12, 112), comprising:
blending a mixture of natural cellulosic fibers and Polypropylene containing Maleic Anhydride grafted Polypropylene fibers;
forming at least one nonwoven web (14, 114) from the blended mixture;
bonding the at least one nonwoven web (14, 114); and
laminating a scrim layer (16, 116) to a surface of the at least one bonded web (14, 114) and at least partially melting and diffusing the scrim material into a surface and into the interstices of the at least one nonwoven web (14, 114) to form an alloy region (18, 118) containing material of both said at least one nonwoven web (14, 114) and the scrim layer (16, 116), thereby filling voids within the at least one nonwoven web (14, 114) that would otherwise create stress risers and providing the finished nonwoven material (12, 112) with a density between about 300-1200gsm.

10. The method of claim 9 wherein said alloy region (18, 118) is formed such that the nonwoven material (12, 112) has a flexural strength across machine direction in excess of 70.5N.

11. The method of claim 9 further including forming and bonding a pair of the webs (114) and laminating the scrim layer (116) in sandwiched relation between the pair of bonded webs (114) to form a pair of alloy regions (118) containing material of the nonwoven webs (114) and the scrim layer (116).

12. The method of claim 9 further including molding the nonwoven material (12, 112) to form a vehicle door bolster (10).

13. The method of claim 9 further including forming the mixture having a proportion of about 50 percent natural cellulosic fibers to 50 percent Polypropylene containing Maleic Anhydride grafted Polypropylene fibers.

## Patentansprüche

1. Vliesmaterial (12, 112), umfassend:
mindestens ein Vliesnetz (14, 114), welches aus cellulosischen Naturfasern und modifizierten Polypropylenfasern gebildet ist, welche Polypropylen enthalten, welches mit Maleinsäureanhydrid gepfropftem Polypropylen gemischt ist;
eine Gelegeschicht (16, 116), welche an eine Außenfläche des mindestens einen Vliesnetzes (14, 114) gebunden ist, und mindestens zum Teil in die Zwischenräume des mindestens einen Vliesnetzes (14, 114) diffundiert ist, um einen Legierungsbereich (18, 118) zu bilden, welcher Material von sowohl dem mindestens einen Vliesnetz (14, 114) als auch der Gelegeschicht (16, 116) enthält, dadurch die Hohlräume innerhalb des mindestens einen Vliesnetzes (14, 114) auffüllend, welche ansonsten Spannungserhöher bilden würden; und
wobei das mindestens eine Vliesmaterial (12, 112) eine Gesamtdichte zwischen 300-1200 g/m² aufweist.

2. Vliesmaterial (12, 112) nach Anspruch 1, wobei der Legierungsbereich (18, 118) so gebildet ist, dass das Vliesmaterial (12, 112) eine Biegefestigkeit quer zur Maschinenlaufrichtung oberhalb von 70,5 N aufweist.

3. Vliesmaterial (12, 112) nach Anspruch 1, wobei die Gelegeschicht (16, 116) eine Außenfläche des mindestens einen Vliesmaterials bildet.

4. Vliesmaterial (12, 112) nach Anspruch 3, wobei das Vliesmaterial (12, 112) eine Biegefestigkeit quer zur Maschinenlaufrichtung oberhalb von 76 N aufweist.

5. Vliesmaterial (112) nach Anspruch 1, wobei die Gelegeschicht (116) zwischen einem Paar des mindestens einen Vliesnetzes (114) eingeklemmt ist und mindestens zum Teil in jedes der Vliesnetze (114) diffundiert ist, um ein Paar Legierungsbereiche (118) an gegenüberliegenden Seiten der Gelegeschicht (116) zu bilden, wobei die Legierungsbereiche (118) Material von getrennten der Vliesnetze (114) und der Gelegeschicht (116) enthalten.

6. Vliesmaterial (112) nach Anspruch 5, wobei das Vliesmaterial (12, 112) eine Biegefestigkeit quer zur Maschinenlaufrichtung oberhalb von 80 N aufweist.

7. Vliesmaterial (112) nach Anspruch 5, wobei jedes Vliesnetz (114) des Paares der Vliesnetze (114) eine Dichte von ungefähr 600 g/m² aufweist.

8. Vliesmaterial (12, 112) nach Anspruch 1, wobei das Vliesmaterial (12, 112) so geformt ist, dass es eine Fahrzeugtürpolsterung bildet.

9. Verfahren zur Herstellung eines Vliesmaterials (12, 112), umfassend:
Mischen einer Mischung von cellulosischen Naturfasern und Polypropylen, welches mit Maleinsäureanhydrid gepfropfte Polypropylenfasern enthält;
Formen mindestens eines Vliesnetzes (14, 114) aus der gemischten Mischung;
Verkleben des mindestens einen Vliesnetzes (14, 114); und
Beschichten einer Gelegeschicht (16, 116) auf die Oberfläche des mindestens einen verklebten Netzes (14, 114) und mindestens teilweises Schmelzen und Diffundieren des Gelegematerials in eine Oberfläche und in die Zwischenräume des mindestens einen Vliesnetzes (14, 114), um einen Legierungsbereich (18, 118) zu bilden, welcher Material von sowohl dem mindestens einen Vliesnetz (14, 114) als auch der Gelegeschicht (16, 116) enthält, dadurch die Hohlräume innerhalb des mindestens einen Vliesnetzes (14, 114) füllend, welche ansonsten Spannungserhöher bilden würden, und das fertige Vliesmaterial (12, 112) mit einer Dichte von ungefähr 300-1200 g/m² versehend.

10. Verfahren nach Anspruch 9, wobei der Legierungsbereich (18, 118) so bildet ist, dass das Vliesmaterial (12, 112) eine Biegefestigkeit quer zur Maschinenlaufrichtung oberhalb von 70,5 N aufweist.

11. Verfahren nach Anspruch 9, ferner einschließend das Formen und Verkleben eines Netzpaares (114) und Beschichten der Gelegeschicht (116) in einer sandwichartigen Beziehung zwischen dem verklebten Netzpaar (114), um ein Legierungsbereichspaar (118) zu bilden, welches Material des Vliesnetzes (114) und der Gelegeschicht (116) enthält.

12. Verfahren nach Anspruch 9, ferner einschließend das Formen des Vliesmaterials (12, 112), so dass es eine Fahrzeugtürpolsterung (10) bildet.

13. Verfahren nach Anspruch 9, ferner einschließend das Bilden der Mischung, welche einen Anteil von ungefähr 50 Prozent cellulosischen Naturfasern und 50 Prozent Polypropylen, welches mit Maleinsäureanhydrid gepfropfte Polypropylenfasern enthält, aufweist.

## Revendications

1. Matériau non tissé (12, 112), comprenant :
au moins une bande non tissée (14, 114) formée de fibres cellulosiques naturelles et de fibres de polypropylène modifiées contenant du polypropylène mélangé à du polypropylène greffé à l'anhydride maléique ;
une couche de gaze (16, 116) liée à une surface externe de ladite au moins une bande non tissée (14, 114) et étant au moins partiellement diffusé dans les interstices de ladite au moins une bande non tissée (14, 114) pour former une zone d'alliage (18, 118) contenant à la fois du matériau de ladite au moins une bande non tissée (14, 114) et de ladite couche de gaze (16, 116), remplissant ainsi les vides au sein de ladite au moins une bande non tissée (14, 114) qui créerait sinon des remontées de contrainte ; et
ledit au moins un matériau non tissé (12, 112) présentant une masse volumique totale comprise entre environ 300 à 1200 g/m².

2. Matériau non tissé (12, 112) selon la revendication 1, ladite zone d'alliage (18, 118) étant formée de sorte que le matériau non tissé (12, 112) présente une résistance à la flexion dans le sens machine supérieure à 70,5 N.

3. Matériau non tissé (12, 112) selon la revendication 1, ladite couche de gaze (16, 116) formant la surface externe dudit au moins un matériau non tissé.

4. Matériau non tissé (12, 112) selon la revendication 3, ledit matériau non tissé (12, 112) présentant une résistance à la flexion dans le sens machine d'environ 76 N.

5. Matériau non tissé (112) selon la revendication 1, ladite couche de gaze (116) étant intercalée entre une paire desdites au moins une bande non tissée (114) et étant au moins partiellement diffusée dans chacune desdites bandes non tissées (114) pour former une paire de zones d'alliage (118) sur les côtés opposés de ladite couche de gaze (116), lesdites zones d'alliage (118) contenant un matériau provenant des matériaux distincts parmi lesdites bandes non tissées (114) et ladite couche de gaze (116).

6. Matériau non tissé (112) selon la revendication 5, ledit matériau non tissé (12, 112) présentant une résistance à la flexion dans le sens machine d'environ 80 N.

7. Matériau non tissé (112) selon la revendication 5, chaque bande non tissée (114) de ladite paire de bandes non tissées (114) ayant une masse volumique d'environ 600 g/m².

8. Matériau non tissé (12, 112) selon la revendication 1, ledit matériau non tissé (12, 112) étant moulé pour former un rembourrage de porte de véhicule.

9. Procédé de construction d'un matériau non tissé (12, 112), comprenant :
l'homogénéisation d'un mélange de fibres cellulosiques naturelles et de polypropylène contenant des fibres de polypropylène greffées à l'anhydride maléique ;
la formation d'au moins une bande non tissée (14, 114) à partir du mélange homogénéisé ;
la liaison de ladite au moins une bande non tissée (14, 114) ; et
la stratification d'une couche de gaze (16, 116) à une surface de ladite au moins une bande liée (14, 114) et la fusion et la diffusion au moins partielles du matériau de gaze à la surface et dans les interstices de ladite au moins une bande non tissée (14, 114) pour former une zone d'alliage (18, 118) contenant à la fois du matériau de ladite au moins une bande non tissée (14, 114) et de la couche de gaze (16, 116), remplissant ainsi les vides au sein de ladite au moins une bande non tissée (14, 114) qui créerait sinon des remontées de contrainte et dotant le matériau non tissé (12, 112) fini d'une masse volumique comprise entre environ 300 à 1200 g/ₘ².

10. Procédé selon la revendication 9, ladite zone d'alliage (18, 118) étant formée de sorte que le matériau non tissé (12, 112) présente une résistance à la flexion dans le sens machine supérieure à 70,5 N.

11. Procédé selon la revendication 9, comprenant en outre la formation et la liaison d'une paire de bandes (114) et la stratification de la couche de gaze (116) prise en sandwich entre la paire de bandes liées (114) pour former une paire de zones d'alliage (118) contenant du matériau des bandes non tissées (114) et de la couche de gaze (116).

12. Procédé selon la revendication 9 comprenant en outre le moulage du matériau non tissé (12, 112) pour former un rembourrage de porte de véhicule (10).

13. Procédé selon la revendication 9 comprenant en outre la formation du mélange comportant une proportion d'environ 50 pour cent de fibres cellulosiques naturelles pour 50 pour cent de polypropylène contenant des fibres de polypropylène greffées à l'anhydride maléique.
